(19) Europäisches Patentamt / European Patent Office / Office européen des brevets

(11) **EP 2 767 521 B1**

(12) **EUROPEAN PATENT SPECIFICATION**

(45) Date of publication and mention
of the grant of the patent:
**28.02.2018 Bulletin 2018/09**

(21) Application number: **12840178.3**

(22) Date of filing: **29.08.2012**

(51) Int Cl.:
*C04B 22/06* (2006.01)      *C04B 22/08* (2006.01)
*C04B 22/14* (2006.01)      *C04B 28/02* (2006.01)
*C04B 40/02* (2006.01)      *C04B 28/16* (2006.01)
*C04B 7/32* (2006.01)      *C04B 40/00* (2006.01)
*C04B 103/14* (2006.01)

(86) International application number:
**PCT/JP2012/071898**

(87) International publication number:
**WO 2013/054604 (18.04.2013 Gazette 2013/16)**

(54) **METHOD FOR MANUFACTURING RAPID-HARDENING AGENT AND CONCRETE PRODUCT**

VERFAHREN ZUR HERSTELLUNG EINES SCHNELL AUSHÄRTENDEN MITTELS UND
BETONPRODUKT

PROCÉDÉ DE FABRICATION D'UN AGENT DE DURCISSEMENT RAPIDE ET PRODUIT À BASE
DE BÉTON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.10.2011 JP 2011226165
28.12.2011 JP 2011289924**

(43) Date of publication of application:
**20.08.2014 Bulletin 2014/34**

(73) Proprietor: **Denka Company Limited
Niigata 949-0393 (JP)**

(72) Inventors:
• **HIGUCHI, Takayuki
Itoigawa-shi
Niigata 949-0393 (JP)**
• **NGUYEN, Phuong Duc
Itoigawa-shi
Niigata 949-0393 (JP)**
• **TOMIOKA, Shigeru
Itoigawa-shi
Niigata 949-0393 (JP)**
• **YOSHINO, Ryoetsu
Itoigawa-shi
Niigata 949-0393 (JP)**

(74) Representative: **Blodig, Wolfgang
Wächtershäuser & Hartz
Patentanwaltspartnerschaft mbB
Weinstrasse 8
80333 München (DE)**

(56) References cited:
WO-A1-2010/143506     JP-A- H0 952 748
JP-A- 2001 039 748     JP-A- 2001 316 147
JP-A- 2002 293 591     JP-A- 2008 266 108

• **YOSHIO KASAI CONCRETE SORAN 10 June
1998, XP008173825**

EP 2 767 521 B1

EP 2 767 521 B1

**Description**

TECHNICAL FIELD

The present invention relates to a rapid-hardening additive for a concrete product to be used in the field of civil engineering and construction, and a method for producing a concrete product.

BACKGROUND ART

A concrete product is usually produced by casting concrete in a formwork made of steel, followed by preliminary curing and steam curing to promote development of the strength of concrete, and then by cooling and removal of the formwork. A formwork made of steel is very expensive, and it is desired to use one formwork plural times in one day. However, there is a limit since a prescribed strength of concrete is required for removal of the formwork from the concrete. Therefore, a production method has been studied to develop a high compressive strength in a short curing period (Patent Document 1).

As a rapid-hardening additive, one composed mainly of free lime, anhydrous gypsum or a sulfate of an alkali metal, or one having a specific compound such as glycerin and an alkali metal sulfate combined, is known (Patent Documents 2, 3, 4 and 5). However, none of them was sufficient in the performance.

PRIOR ART DOCUMENTS

PATENT DOCUMENTS

Patent Document 1: JP-A-2000-301531
Patent Document 2: JP-A-2001-294460
Patent Document 3: JP-A-2011-153068
Patent Document 4: JP-A-2000-233959
Patent Document 5: JP-A-2008-519752

JP-A-2002-293591 discloses a cement admixture containing quick lime or a mixture of quick lime, inorganic sulfate and an expansion material, the main constitutional compound of which is 1 or >=2 kinds of hydraulic compounds selected from among free lime, gypsum anhydride, hauyne, calcium ferrite, calcium alumino ferrite, and calcium silicate.

JP-9-52748 discloses an irritant for blended cement formed by heat treating a blend containing CaO, $Al_2O_3$ and $CaSO_4$ as starting materials and composed of a mineral group with a free lime, hauynite and anhydrous gypsum as an active principle. JP-A-2001-316147 discloses a cement admixture obtained from a heat-treated base material of CaO, $Al_2O_3$, $Fe_2O_3$ and $CaSO_4$ contains a free lime, calcium aluminoferrite, a haueyne and an anhydrous gypsum.

WO 2010143506 discloses an expansive admixture which is characterized by being obtained by heating clinker or ground clinker, which contains quicklime, a hydraulic compound and anhydrous gypsum.

DISCLOSURE OF INVENTION

TECHNICAL PROBLEM

In recent years, in order to reduce environmental burdens, the number of cases has been increasing in which a mixed cement having an additive such as blast furnace slag or fly ash blended to cement, is used. The purpose is to suppress $CO_2$ emissions by reducing cement clinker.

However, such a mixed cement is poor in development of the initial strength. Accordingly, also in the production of a concrete product, a rapid-hardening additive and production method capable of promoting the development of the initial strength, have been desired. Further, there has been a problem such that a brittle layer so-called laitance is likely to be formed on the surface of a concrete product.

It is an object of the present invention to provide a rapid-hardening additive and a method for producing a concrete product, whereby even when a mixed cement is used, it is possible to promote the development of the initial strength and to prevent formation of laitance.

2

SOLUTION TO PROBLEM

The present invention provides the subject matter of claims 1 to 8.

ADVANTAGEOUS EFFECTS OF INVENTION

By the rapid-hardening additive of the present invention, as compared with conventional ones, the setting time becomes short, whereby surface finish or steam curing can be carried out promptly, a prescribed compressive strength can be secured even when the curing time is short, such a compressive strength can be developed in a short time even when a mixed cement is used, early removal of formwork from concrete becomes possible, and further, it presents an effect to prevent laitance which is likely to be formed on the surface of a concrete product and an effect to suppress a shrinkage strain which may cause cracking.

DESCRIPTION OF EMBODIMENTS

The "parts" and "%" used in the present invention, are based on mass unless otherwise specified.

Further, "concrete" used in the present invention, is a general term for cement paste, cement mortar and cement concrete.

The heat-treated product in the present invention is one obtained by heat-treating a mixture of a CaO raw material, a $CaSO_4$ raw material and at least one raw material selected from the group consisting of an $Al_2O_3$ raw material, a $Fe_2O_3$ raw material and a $SiO_2$ raw material, in the atmosphere.

The free lime in the present invention is one which is usually called f-CaO.

The hydraulic compound in the present invention is yeelimite (also called haüyne) represented by $3CaO·3Al_2O_3·CaSO_4$, a calcium silicate represented by $3CaO·SiO_2$ (abbreviated as $C_3S$) or $2CaO·SiO_2$ (abbreviated as $C_2S$), a calcium alumino ferrite represented by $4CaO·Al_2O_3·Fe_2O_3$ (abbreviated as $C_4AF$), $6CaO·2Al_2O_3·Fe_2O_3$ (abbreviated as $C_6A_2F$) or $6CaO·Al_2O_3·Fe_2O_3$ (abbreviated as $C_6AF$), or a calcium ferrite such as $2CaO·Fe_2O_3$ (abbreviated as $C_2F$). It is preferred that one or more of them are contained.

Particularly, the hydraulic compound is preferably at least one member selected from the group consisting of $3CaO·3Al_2O_3·CaSO_4$, $4CaO·Al_2O_3·Fe_2O_3$ and $2CaO·SiO_2$, more preferably $3CaO·3Al_2O_3·CaSO_4$, or a mixture of $3CaO·3Al_2O_3·CaSO_4$, $4CaO·Al_2O_3·Fe_2O_3$ and $2CaO·SiO_2$, particularly preferably $3CaO·3Al_2O_3·CaSO_4$.

The anhydrous gypsum in the present invention is one represented by $CaSO_4$.

The CaO raw material may, for example, be limestone or slaked lime. The $Al_2O_3$ raw material may, for example, be bauxite or aluminum dross residual ash. The $Fe_2O_3$ raw material may, for example, be copper slag or a commercially available iron oxide. The $SiO_2$ raw material may, for example, be silica stone. The $CaSO_4$ raw material may, for example, be gypsum dihydrate, gypsum hemihydrate or anhydrous gypsum.

These raw materials may sometimes contain impurities, but such impurities will not be problematic so long as they are within a range not to impair the effects of the present invention. Such impurities include, for example, MgO, $TiO_2$, $ZrO_2$, MnO, $P_2O_5$, $Na_2O$, $K_2O$, $Li_2O$, sulfur, fluorine, chlorine, etc.

The method for heat-treating a mixture of a CaO raw material, a $CaSO_4$ raw material and at least one raw material selected from the group consisting of an $Al_2O_3$ raw material, a $Fe_2O_3$ raw material and a $SiO_2$ raw material, is not particularly limited. For example, by means of an electric furnace or kiln, firing is carried out at a temperature of preferably from 1,000 to 1,600°C, more preferably from 1,200 to 1,500°C. If the temperature is lower than 1,000°C, there may be a case where it tends to be difficult to secure the fluidity of concrete immediately after mixing, or development of the initial strength tends to be inadequate, and if it exceeds 1,600°C, there may be a case where anhydrous gypsum undergoes decomposition, or development of the initial strength tends to be inadequate. The time for the heat treatment may depend on the temperature, but the retention time at the maximum temperature is preferably from 0 to 2.0 hours, more preferably from 0.25 to 1.75 hours.

The contents of the respective components in the heat-treated product thereby obtained, are in the following ranges. The content of the free lime is from 10 to 70 parts, preferably from 20 to 60 parts, per 100 parts in total of the free lime, the hydraulic compound and the anhydrous gypsum. The content of the hydraulic compound is from 10 to 50 parts, preferably from 20 to 30 parts, per 100 parts in total of the free lime, the hydraulic compound and the anhydrous gypsum. The content of the anhydrous gypsum is from 10 to 60 parts, preferably from 20 to 50 parts, per 100 parts in total of the free lime, the hydraulic compound and the anhydrous gypsum.

Further, it is preferred to treat the rapid-hardening additive with carbon dioxide gas to form calcium carbonate in the rapid-hardening additive, in order to secure a slump immediately after mixing. The content of the calcium carbonate is preferably from 0.1 to 10 parts, more preferably from 1 to 5 parts, per 100 parts in total of the free lime, the hydraulic compound and the anhydrous gypsum. If the content is outside the above range, there may be a case where improvement in the slump immediately after mixing is less, or development of the strength tends to be low.

The contents of the above respective components can be ascertained by a conventional analytical method. For example, a pulverized sample may be subjected to a powder X-ray diffraction apparatus, whereby it is possible to ascertain the formed minerals and at the same time to analyze the data by a Rietveld method to quantitatively analyze the respective components. Further, it is possible to obtain the amounts of the respective components by calculation based on the chemical components and the results of identification by the powder X-ray diffraction. The content of calcium carbonate can be quantified from a weight change due to decarbonation of calcium carbonate by means of e.g. a differential thermobalance (TG-DTA) or a differential scanning calorimetry (DSC).

The degree of fineness of the rapid-hardening additive of the present invention is preferably from 2,500 to 9,000 $cm^2/g$, more preferably from 3,500 to 9,000 $cm^2/g$, by Blaine's specific surface area. If it is less than 2,500 $cm^2/g$, there may be a case where the promotion of the initial strength tends to be inadequate, or the subsequent expansion continues for a long period of time to lower the strength. On the other hand, if it exceeds 9,000 $cm^2/g$, there may be a case where the fluidity of concrete tends to be low.

In the rapid-hardening additive of the present invention, it is preferred to incorporate fine Portland cement and/or fine free lime and/or fine anhydrous gypsum to the heat-treated product containing the free lime, the hydraulic compound and the anhydrous gypsum, obtained by heat-treating a mixture of a CaO raw material, an $Al_2O_3$ raw material and at least one raw material selected from the group consisting of an $Al_2O_3$ raw material, a $Fe_2O_3$ raw material and a $SiO_2$ raw material, whereby development of the initial strength will be improved.

The fine Portland cement is preferably one having an average particle size of at most 6 $\mu$m and at least 0.1 $\mu$m. The average particle size can be measured by a laser diffraction particle size distribution meter.

As the fine Portland cement, it is possible to use one obtained by pulverizing and classifying any one of various Portland cements such as ordinary, high-early-strength, ultrahigh-early-strength, low-heat and moderate-heat Portland cements. The proportion of the fine Portland cement to be incorporated is not particularly limited, but it is usually preferably at most 40 parts, more preferably from 10 to 30 parts, per 100 parts in total of the free lime, the hydraulic compound, the anhydrous gypsum and the fine Portland cement. If it is incorporated in a proportion exceeding 40 parts, there may be a case where the initial strength rather tends to be low.

As the fine free lime, it is possible to use one obtained by pulverizing free lime obtained by firing lime stone or slaked lime. The average particle size is preferably at most 20 $\mu$m, more preferably at most 15 $\mu$m, and usually preferably at least 0.1 $\mu$m.

As the fine gypsum, it is possible to use one obtained by pulverizing e.g. natural anhydrous gypsum, gypsum dihydrate or gypsum hemihydrate. The average particle size is preferably at most 20 $\mu$m, more preferably at most 15 $\mu$m, and usually preferably at least 0.1 $\mu$m.

The proportion of the fine free lime and/or the fine anhydrous gypsum to be incorporated is not particularly limited, but is usually preferably at most 60 parts per 100 parts in total of the heat-treated product and the fine free lime and/or the fine anhydrous gypsum. If it exceeds 60 parts, there may be a case where the fluidity of concrete decreases, whereby it becomes difficult to fill the concrete in a formwork, or a case where the initial strength rather tends to be low. Further, the proportion of the fine free lime and/or the fine anhydrous gypsum to be incorporated, is preferably at least 10 parts per 100 parts in total of the heat-treated product and the fine free lime and/or the fine anhydrous gypsum.

Here, in the present invention, the average particle size of the fine Portland cement, the fine free lime or the fine anhydrous gypsum is measured by means of a laser diffraction particle size distribution meter, in a state as dispersed by means of an ultrasonic device.

With the rapid-hardening additive of the present invention, it is possible to improve development of the initial strength by adding glycerin to the heat-treated product obtainable by heat treating a mixture of a CaO raw material, a $CaSO_4$ raw material and at least one raw material selected from the group consisting of an $Al_2O_3$ raw material, a $Fe_2O_3$ raw material and a $SiO_2$ raw material, or to one having the fine Portland cement and/or the fine free lime and/or the fine anhydrous gypsum added to the heat-treated product.

The glycerin to be used in the present invention is a compound represented by a chemical formula of $C_3H_8O_3$, or known by a chemical name of 1,2,3-propanetriol or glycerol.

The proportion of glycerin to be added to the heat-treated product is from 0.1 to 10 parts, more preferably from 1 to 5 parts, per 100 parts in total of the heat-treated product or one having the fine Portland cement and/or the fine free lime and/or the fine anhydrous gypsum added to the heat-treated product, and the glycerin. If it is less than 0.1 part, there may be a case where the effect to increase the initial strength or to prevent laitance is not obtainable, and if it exceeds 10 parts, there may be a case where the fluidity of concrete tends to be deteriorated.

Further, from the viewpoint of development of the strength, it is preferred to add glycerin to the heat-treated product or a mixture of the heat-treated product with the fine Portland cement and/or the fine free lime and/or the fine anhydrous gypsum, followed by simultaneous pulverization to let it deposit on the surface of the pulverized product.

The amount of the rapid-hardening additive of the present invention to be used, varies depending upon the formulation of concrete and is not particularly limited, but it is usually from 2 to 15 parts, preferably from 5 to 12 parts, in 100 parts of the cement composition comprising cement and the rapid-hardening additive. When it is within such a range, there may be a case where an effect to increase the compressive strength is obtainable.

As the cement to be used in the present invention, various Portland cements such as ordinary, high-early-strength, ultrahigh-early-strength, low-heat and moderate-heat Portland cements, various mixed cements having at least one member selected from the group consisting of slag, fly ash and silica mixed to such cements, and filler cements having lime stone powder added, etc., may be mentioned. Among them, it is preferred to use a mixed cement, whereby environmental burdens may be reduced, and the effect to increase the strength tends to be high when the rapid-hardening additive of the present invention is employed. As the cement to be used in the present invention, it is particularly preferred to use a mixed cement containing slag and/or fly ash.

The curing conditions for concrete from casting to removal of formwork in the present invention are preferably set as follows. The steam curing temperature for concrete from casting to removal of formwork is at most 70°C, preferably at most 60°C. If cured at a temperature exceeding 70°C, the concrete may have cracks. Further, usually, the steam curing temperature is preferably at least 40°C.

Further, it is preferred to set the maturity for concrete from casting to removal of formwork to be from 210 to 320°C·hr. Here, the maturity is defined by the following formula.

$$\text{Maturity } M = \sum (T + 10)\Delta t$$

T: Temperature of concrete at a time $\Delta t$
$\Delta t$: Elapsed time (hr)

If the maturity is less than 210°C·hr, there may be a case where development of the compressive strength is inadequate, whereby it is not possible to remove the formwork, and if it exceeds 320°C·hr, there may be a case where it takes a long time for the production, such being economically disadvantageous. The maturity from casting to removal of formwork is more preferably from 230 to 300°C·hr.

In the present invention, it is possible to incorporate not only sand or gravel but also a water-reducing agent, a high performance water-reducing agent, an AE water-reducing agent, a high performance AE water-reducing agent, a fluidizer, a defoaming agent, a thickener, an anticorrosive agent, an antifreeze agent, a shrinkage-reducing agent, a polymer emulsion, a setting modifier, a quick hardening agent for cement, a clay mineral such as bentonite, an ion exchanger such as zeolite, silica fine powder, calcium carbonate, calcium hydroxide, gypsum, calcium silicate, steel fibers, etc. As an organic material, a fiber material such as vinylon fiber, acrylic fiber, carbon fiber, etc., may be mentioned.

EXAMPLES

Now, the present invention will be described in detail with reference to Examples and Comparative Examples, but it should be understood that the present invention is by no means restricted by these Examples.

TEST EXAMPLE 1

As identified in the following "Employed materials", the CaO raw material, the $CaSO_4$ raw material, and at least one raw material selected from the group consisting of the $Al_2O_3$ raw material, the $Fe_2O_3$ raw material and the $SiO_2$ raw material, were mixed. The obtained mixture was heat-treated at 1,350°C for 0.5 hour in the atmosphere by means of an electric furnace, and the obtained heat-treated product was pulverized by a ball mill to prepare a rapid-hardening additive (A to H). Further, rapid-hardening additive (I) having fine ordinary Portland cement added to a pulverized product of the heat-treated product, was prepared. Further, rapid-hardening additives (a to t) having glycerin added to the heat-treated product or to a mixture of the heat-treated product with the fine free lime and the fine anhydrous gypsum, followed by pulverization in a ball mill, were prepared.

Further, as shown in Table 1, commercial products A to C of rapid-hardening additive or expanding material, rapid-hardening additive (J) having fine ordinary Portland cement added to commercial product B, one having glycerin added to commercial product A, and one having only glycerin added, were used as Comparative Examples.

Here, with respect to the heat-treated product, the composition and contents of the respective components were determined by the powder X-ray diffraction and elemental analyses.

The basic blend composition of concrete was set to be a unit amount of water being 145 kg/m$^3$, a unit amount of cement being 440 kg/m$^3$, a unit amount of rapid-hardening additive being 30 kg/m$^3$ (0.9 kg/m$^3$ in the case of one having glycerin added to commercial product A or one having only glycerin added), a water-reducing agent being 2.5 kg/m$^3$, s/a being 39.4% and an amount of air being 4.5%, and in an atmosphere of 20°C, the slump and setting time of concrete were measured while changing the type of the rapid-hardening additive as shown in Table 1.

Then, the concrete was filled in a formwork, left at 20°C for a precuring time of 40 minutes, subjected to temperature raising for 30 minutes, kept at the maximum temperature of 50°C for 3 hours and cooled for 30 minutes, and then, the formwork was removed. The compressive strength was measured immediately after the removal of the formwork and after the curing in the atmosphere of 20°C. Further, the presence or absence of a laitance on the concrete surface and the length change were evaluated. The results are shown in Table 1.

The rapid-hardening additive was incorporated to be substituted for aggregate, and a study was made also with respect to a composition having no rapid-hardening additive incorporated.

(Employed materials)

CaO raw material: Calcium carbonate (fine powder of lime), 100 mesh, commercial product

$Al_2O_3$ raw material: Bauxite, 90 μm sieve pass rate: 100%, commercial product

$Fe_2O_3$ raw material: Iron oxide powder, Blaine's specific surface area: 3,000 cm$^2$/g, commercial product

$SiO_2$ raw material: Silica powder, Blaine's specific surface area: 3,000 cm$^2$/g, commercial product

$CaSO_4$ raw material: Gypsum dihydrate, Blaine's specific surface area: 5,000 cm$^2$/g, commercial product

Cement: Ordinary Portland cement, commercial product, density: 3.16 g/cm$^3$

Fine ordinary Portland cement: Average particle size: 3 μm, density: 3.16 g/cm$^3$

Fine free lime (1): CaO content: 97%, average particle size: 10 μm, commercial product

Fine anhydrous gypsum (1): Natural anhydrous gypsum, average particle size: 8 μm, commercial product

Fine free lime (2): CaO content: 97%, average particle size: 18 μm, commercial product

Fine anhydrous gypsum (2): Natural anhydrous gypsum, average particle size: 15 μm, commercial product

Glycerin: Commercial product, purified glycerin

Sand: JIS standard sand

Water: Tap water

Fine aggregate: Product in Himekawa, Niigata-ken, Japan, less than 5 mm, density: 2.62 g/cm$^3$

Coarse aggregate: Product in Himekawa, Niigata-ken, Japan, less than 25 mm, density: 2.64 g/cm$^3$

Water-reducing agent: Naphthalene sulfonic acid, trade name "Mighty 150", manufactured by Kao Corporation

Rapid-hardening additive A: 21 parts of free lime, 32 parts of Yeelimite, 47 parts of anhydrous gypsum, density: 2.90 g/cm$^3$, Blaine's specific surface area: 3,500 cm$^2$/g

Rapid-hardening additive B: One having rapid-hardening additive A pulverized to a Blaine's specific surface area of 6,000 cm$^2$/g

Rapid-hardening additive C: One having rapid-hardening additive A pulverized to a Blaine's specific surface area of 9,000 cm$^2$/g

Rapid-hardening additive D: 32 parts of free lime, 21 parts of Yeelimite, 5 parts of $C_4AF$, 5 parts of $C_2S$, 37 parts of anhydrous gypsum, density: 2.98 g/cm$^3$, Blaine's specific surface area: 3,500 cm$^2$/g

Rapid-hardening additive E: 50 parts of free lime, 10 parts of Yeelimite, 5 parts of $C_4AF$, 5 parts of $C_2S$, 30 parts of anhydrous gypsum, density: 3.05 g/cm$^3$, Blaine's specific surface area: 3,500 cm$^2$/g

Rapid-hardening additive F: One synthesized by putting rapid-hardening additive A in an aluminum crucible, placing it in an electric furnace, and reacting it at a heating temperature of 600°C for 30 minutes while circulating carbon dioxide gas at a rate of 0.05 L/min per 1 L of the internal volume of the electric furnace. 20 Parts of free lime, 32 parts of Yeelimite, 47 parts of anhydrous gypsum, 1 part of calcium carbonate, density: 2.90 g/cm$^3$, Blaine's specific surface area: 6,000 cm$^2$/g

Rapid-hardening additive G: 70 Parts of free lime, 20 parts of Yeelimite, 10 parts of anhydrous gypsum, density: 3.20 g/cm$^3$, Blaine's specific surface area: 3,500 cm$^2$/g

Rapid-hardening additive H: 10 Parts of free lime, 50 parts of Yeelimite, 40 parts of anhydrous gypsum, density: 2.85 g/cm$^3$, Blaine's specific surface area: 3,500 cm$^2$/g

Rapid-hardening additive I: To 80 parts of rapid-hardening additive A, 20 parts of fine ordinary Portland cement having an average particle size of 3 μm was incorporated. Density: 2.95 g/cm$^3$, Blaine's specific surface area: 4,400 cm$^2$/g

Rapid-hardening additive J: To 80 parts of commercial product B, 20 parts of fine ordinary Portland cement having an average particle size of 3 μm was incorporated. Density: 2.95 g/cm$^3$, Blaine's specific surface area: 4,400 cm$^2$/g

Rapid-hardening additive a: One having 97 parts of a heat-treated product comprising 21 parts of free lime, 32 parts of Yeelimite and 47 part of anhydrous gypsum, and 3 parts of glycerin, mixed and pulverized to adjust the Blaine's specific surface area to 3,500 cm$^2$/g

Rapid-hardening additive b: One having 97 parts of the heat-treated product used for rapid-hardening additive A, and 3 parts of glycerin, mixed and pulverized to adjust the Blaine's specific surface area to 6,000 cm$^2$/g

Rapid-hardening additive c: One having 97 parts of the heat-treated product used for rapid-hardening additive A, and 3 parts of glycerin, mixed and pulverized to adjust the Blaine's specific surface area to 9,000 cm$^2$/g

Rapid-hardening additive d: One having 97 parts of a heat-treated product comprising 30 parts of free lime, 20 parts of Yeelimite, 5 parts of C$_4$AF, 5 parts of C$_2$S and 40 parts of anhydrous gypsum, and 3 parts of glycerin, mixed and pulverized to adjust the Blaine's specific surface area to 3,500 cm$^2$/g

Rapid-hardening additive e: One having 97 parts of a heat-treated product comprising 50 parts of free lime, 10 parts of Yeelimite, 5 parts of C$_4$AF, 5 parts of C$_2$S and 30 parts of anhydrous gypsum, and 3 parts of glycerin, mixed and pulverized to adjust the Blaine's specific surface area to 3,500 cm$^2$/g

Rapid-hardening additive f: One having 97 parts of a heat-treated product comprising 30 parts of free lime, 10 parts of Yeelimite and 60 parts of anhydrous gypsum, and 3 parts of glycerin, mixed and pulverized to adjust the Blaine's specific surface area to 4,000 cm$^2$/g

Rapid-hardening additive g: One having 97 parts of a heat-treated product comprising 70 parts of free lime, 20 parts of Yeelimite and 10 parts of anhydrous gypsum (Blaine's specific surface area: 3,500 cm$^2$/g), and 3 parts of glycerin, mixed and pulverized to adjust the Blaine's specific surface area to 3,500 cm$^2$/g

Rapid-hardening additive h: One having 97 parts of a heat-treated product comprising 10 parts of free lime, 50 parts of Yeelimite and 40 parts of anhydrous gypsum, and 3 parts of glycerin, mixed and pulverized to adjust the Blaine's specific surface area to 3,500 cm$^2$/g

Rapid-hardening additive i: One obtained by pulverizing a heat-treated product comprising 21 parts of free lime, 32 parts of Yeelimite and 47 parts of anhydrous gypsum to a Blaine's specific surface area of 3,500 cm$^2$/g, and mixing 97 parts of the pulverized product and 3 parts of glycerin

Rapid-hardening additive j: One having 70 parts of a heat-treated product comprising 21 parts of free lime, 32 parts of Yeelimite and 47 parts of anhydrous gypsum, 13.5 parts of fine lime (1), 13.5 parts of fine anhydrous gypsum (1), and 3 parts of glycerin, mixed and pulverized to adjust the Blaine's specific surface area to 6,000 cm$^2$/g

Rapid-hardening additive k: One having 50 parts of a heat-treated product comprising 21 parts of free lime, 32 parts of Yeelimite and 47 parts of anhydrous gypsum, 23.5 parts of fine free lime (1), 23.5 parts of fine anhydrous gypsum (1), and 3 parts of glycerin, mixed and pulverized to adjust the Blaine's specific surface area to 6,000 cm$^2$/g

Rapid-hardening additive l: One having 40 parts of a heat-treated product comprising 21 parts of free lime, 32 parts of Yeelimite and 47 parts of anhydrous gypsum, 28.5 parts of fine free lime (1), 28.5 parts of fine anhydrous gypsum (1), and 3 parts of glycerin, mixed and pulverized to adjust the Blaine's specific surface area to 6,000 cm$^2$/g

Rapid-hardening additive m: One having 30 parts of a heat-treated product comprising 21 parts of free lime, 32 parts of Yeelimite and 47 parts of anhydrous gypsum, 33.5 parts of fine free lime (1), 33.5 parts of fine anhydrous gypsum (1), and 3 parts of glycerin, mixed and pulverized to adjust the Blaine's specific surface area to 6,000 cm$^2$/g

Rapid-hardening additive n: One having 48.5 parts of fine free lime (1), 48.5 parts of fine anhydrous gypsum (1), and 3 parts of glycerin, mixed and pulverized to adjust the Blaine's specific surface area to 5,000 cm$^2$/g

Rapid-hardening additive o: One having 50 parts of a heat-treated product comprising 21 parts of free lime, 32 parts of Yeelimite and 47 parts of anhydrous gypsum, 47 parts of fine free lime (1), and 3 parts of glycerin, mixed and pulverized to adjust the Blaine's specific surface area to 6,000 cm$^2$/g

Rapid-hardening additive p: One having 50 parts of a heat-treated product comprising 21 parts of free lime, 32 parts of Yeelimite and 47 parts of anhydrous gypsum, 47 parts of fine anhydrous gypsum (1), and 3 parts of glycerin, mixed and pulverized to adjust the Blaine's specific surface area to 6,000 cm$^2$/g

Rapid-hardening additive q: One having 50 parts of a heat-treated product comprising 21 parts of free lime, 32 parts of Yeelimite and 47 parts of anhydrous gypsum, 23.5 parts of fine free lime (2), 23.5 parts of fine anhydrous gypsum (2), and 3 parts of glycerin, mixed and pulverized to adjust the Blaine's specific surface area to 6,000 cm$^2$/g

Rapid-hardening additive r: One having 99.9 parts of a heat-treated product comprising 21 parts of free lime, 32 parts of Yeelimite and 47 parts of anhydrous gypsum, and 0.1 part of glycerin, mixed and pulverized to adjust the Blaine's specific surface area to 3,500 cm$^2$/g

Rapid-hardening additive s: One having 99 parts of a heat-treated product comprising 21 parts of free lime, 32 parts of Yeelimite and 47 parts of anhydrous gypsum, and 1 part of glycerin, mixed and pulverized to adjust the Blaine's specific surface area to 3,500 cm$^2$/g

Rapid-hardening additive t: One having 90 parts of a heat-treated product comprising 21 parts of free lime, 32 parts of Yeelimite and 47 parts of anhydrous gypsum, and 10 parts of glycerin, mixed and pulverized to adjust the Blaine's specific surface area to 3,500 cm$^2$/g

Commercial product A: Commercially available rapid-hardening additive comprising 50 parts of lime, 20 parts of calcium silicate and 30 parts of anhydrous gypsum. Blaine's specific surface area: 4,500 cm$^2$/g. The anhydrous gypsum is added later to clinker.

Commercial product B: Ettringite-type expansive additive, density: 2.95 g/cm$^3$, Blaine's specific surface area: 2,800 cm$^2$/g

Commercial product C: Ettringite lime composite expansive additive, density: 3.08 g/cm$^3$, Blaine's specific surface area: 2,800 cm$^2$/g

(Test methods)

Setting test: Carried out in accordance with JIS A-1147. The setting starting time was measured, and using plain concrete having no rapid-hardening additive incorporated, as the standard, the setting promotion effect was evaluated.
Slump: In accordance with JIS A-1101
Compressive strength: In accordance with JIS A-1108
Presence or absence of laitance: The state of laitance formed on the surface of a test sample for measuring the compressive strength was visually evaluated. A case where laitance was observed at more than 30% of the surface of a test sample was rated to be ×, a case where laitance was observed at from 10 to 30% of the surface of a test sample was rated to be Δ, and a case where laitance was observed at from 0 to 10% of the surface of a test sample was rated to be ○.
Length change: In accordance with JIS A-1129. After a test sample was removed from the formwork, it was put in water at 20°C, and the temperature was stabilized. Then, at an age of 1 day, the base length was measured. Further, it was cured in water at 20°C up to an age of 7 days, thereafter, dried and cured in air in a room at 20°C under a relative humidity of 60%, and the shrinkage strain formed in the concrete was measured at an age of 56 days.

Additives A to J, n, and Commercial Products A, B, and C are comparative Examples.

TABLE 1

| Test No. | Rapid-hardening additive | Slump (cm) | Setting promotion effect (hr) | Compressive strength (N/mm²) | | Compressive strength ratio to one having no rapid-hardening additive incorporated | | Laitance | Length change (×10⁻⁶) | Note |
|---|---|---|---|---|---|---|---|---|---|---|
| | | | | At removal of formwork | At age of 7 days | At removal of formwork | At age of 7 days | | | |
| 1-1 | A | 11 | 0.2 | 18.4 | 55.0 | 1.7 | 1.2 | △ | -560 | Comp.Ex. |
| 1-2 | B | 11 | 0.3 | 21.9 | 59.5 | 2.0 | 1.3 | △ | -540 | Comp.Ex. |
| 1-3 | C | 9 | 0.5 | 22.5 | 59.0 | 2.0 | 1.3 | △ | -520 | Comp.Ex. |
| 1-4 | D | 11 | 0.2 | 17.1 | 57.5 | 1.6 | 1.3 | △ | -550 | Comp.Ex. |
| 1-5 | E | 12 | 0 | 16.9 | 54.3 | 1.5 | 1.2 | △ | -550 | Comp.Ex. |
| 1-6 | F | 13 | 0 | 18.8 | 59.1 | 1.7 | 1.3 | △ | -540 | Comp.Ex. |
| 1-7 | G | 11 | 0.3 | 17.2 | 54.4 | 1.6 | 1.2 | △ | -550 | Comp.Ex. |
| 1-8 | H | 12 | 0.3 | 17.5 | 58.6 | 1.6 | 1.3 | △ | -540 | Comp.Ex. |
| 1-9 | I | 11 | 0.5 | 21.5 | 58.9 | 2.0 | 1.3 | △ | -510 | Comp.Ex. |
| 1-10 | J | 11 | 0.1 | 17.7 | 56.6 | 1.6 | 1.2 | △ | -560 | Comp.Ex. |
| 1-11 | a | 11 | 0.9 | 22.6 | 58.3 | 2.1 | 1.3 | ○ | -520 | Ex. |
| 1-12 | b | 10 | 1.5 | 23.5 | 59.0 | 2.1 | 1.3 | ○ | -490 | Ex. |
| 1-13 | c | 9 | 1.8 | 24.3 | 58.6 | 2.2 | 1.3 | ○ | -480 | Ex. |
| 1-14 | d | 11 | 1.2 | 25.4 | 57.6 | 2.3 | 1.3 | ○ | -470 | Ex. |
| 1-15 | e | 12 | 0.8 | 25.6 | 59.3 | 2.3 | 1.3 | ○ | -450 | Ex. |
| 1-16 | f | 11 | 1.8 | 25.3 | 60.2 | 2.3 | 1.3 | ○ | -440 | Ex. |
| 1-17 | g | 10 | 1.6 | 21.5 | 54.0 | 2.0 | 1.2 | △ | -530 | Ex. |
| 1-18 | h | 10 | 1.8 | 22.0 | 58.3 | 2.0 | 1.3 | ○ | -460 | Ex. |
| 1-19 | i | 10 | 0.6 | 20.9 | 55.3 | 1.9 | 1.2 | △ | -530 | Ex. |
| 1-20 | j | 11 | 2.0 | 27.3 | 58.6 | 2.5 | 1.3 | ○ | -460 | Ex. |
| 1-21 | k | 11 | 2.0 | 28.9 | 60.0 | 2.6 | 1.3 | ○ | -450 | Ex. |

| Test No. | Rapid-hardening additive | Slump (cm) | Setting promotion effect (hr) | Compressive strength (N/mm$^2$) | | Compressive strength ratio to one having no rapid-hardening additive incorporated | | Laitance | Length change (×10$^{-6}$) | Note |
|---|---|---|---|---|---|---|---|---|---|---|
| | | | | At removal of formwork | At age of 7 days | At removal of formwork | At age of 7 days | | | |
| 1-22 | l | 11 | 2.0 | 26.4 | 57.7 | 2.4 | 1.3 | ○ | -470 | Ex. |
| 1-23 | m | 10 | 1.5 | 22.0 | 54.0 | 2.0 | 1.2 | △ | -490 | Ex. |
| 1-24 | n | 7 | 0.8 | 17.0 | 53.1 | 1.5 | 1.2 | × | -560 | Comp. Ex. |
| 1-25 | o | 3 | 1.5 | 22.0 | 56.0 | 2.0 | 1.2 | △ | -530 | Ex. |
| 1-26 | p | 12 | 1.5 | 23.1 | 56.9 | 2.1 | 1.2 | △ | -480 | Ex. |
| 1-27 | q | 11 | 2.3 | 25.0 | 58.8 | 2.3 | 1.3 | ○ | -470 | Ex. |
| 1-28 | r | 10 | 0.7 | 20.8 | 57.0 | 1.9 | 1.2 | ○ | -540 | Ex. |
| 1-29 | s | 11 | 0.9 | 21.8 | 58.1 | 2.0 | 1.3 | ○ | -500 | Ex. |
| 1-30 | t | 10 | 1.1 | 20.2 | 55.6 | 1.8 | 1.2 | ○ | -550 | Ex. |
| 1-31 | Only glycerin | 12 | -3.0 | 7.3 | 38.9 | 0.7 | 0.8 | × | -660 | Comp. Ex. |
| 1-32 | Commercial product A | 9 | 0 | 16.6 | 53.6 | 1.5 | 1.2 | × | -550 | Comp. Ex. |
| 1-33 | Commercial product B | 11 | 0 | 15.0 | 54.3 | 1.4 | 1.2 | △ | -560 | Comp. Ex. |
| 1-34 | Commercial product C | 11 | 0 | 13.6 | 53.9 | 1.2 | 1.2 | △ | -570 | Comp. Ex. |
| 1-35 | Commercial product A + glycerin | 9 | 0.1 | 18.1 | 53.5 | 1.6 | 1.2 | × | -570 | Comp. Ex. |
| 1-36 | Nil | 12 | - | 11.0 | 45.8 | 1.0 | 1.0 | × | -590 | Comp. Ex. |

EP 2 767 521 B1

10

TEST EXAMPLE 2

Tests were carried out in the same manner as in Test Example 1, except that using rapid-hardening additive A, rapid-hardening additive B, rapid-hardening additive a, rapid-hardening additive b or rapid-hardening additive k, a part of cement was substituted by blast furnace slag and/or fly ash in an amount shown in Table 2. The results are shown in Table 2. Further, commercial productA and one having glycerin mixed to commercial product A were also evaluated.

(Employed materials)

Fly ash: Tohoku fly ash type II, Blaine's specific surface area: 4,000 cm$^2$/g, density: 2.23 g/cm$^3$
Slag: Blast furnace slag, manufactured by Sumikinkouka Co., Ltd., Smitment, Blaine's specific surface area: 4,000 cm$^2$/g, density: 2.91 g/cm$^3$

TABLE 2

| Test No. | Rapid-hardening additive | Unit amount (kg/m³) | | | Slump (cm) | Setting promotion effect (hr) | Compressive strength (N/mm²) | | Compressive strength ratio to one having no rapid-hardening additive incorporated | | Laitance | Length change (×10⁻⁶) | Note |
| | | Cement | Fly ash | Slag | | | At removal of formwork | At age of 7 days | At removal of formwork | At age of 7 days | | | |
|---|---|---|---|---|---|---|---|---|---|---|---|---|---|
| 1-1 | A | 440 | 0 | 0 | 11 | 0.2 | 18.4 | 55.0 | 1.7 | 1.2 | △ | -560 | Comp. Ex. |
| 2-1 | A | 390 | 50 | 0 | 12 | 0.2 | 16.2 | 51.3 | 1.7 | 1.2 | △ | -570 | Comp. Ex. |
| 2-2 | A | 340 | 0 | 100 | 12 | 0.2 | 14.9 | 52.4 | 1.9 | 1.3 | △ | -580 | Comp. Ex. |
| 2-3 | A | 290 | 50 | 100 | 12 | 0.2 | 12.2 | 49.8 | 1.9 | 1.3 | △ | -590 | Comp. Ex. |
| 1-2 | B | 440 | 0 | 0 | 11 | 0.3 | 21.9 | 59.5 | 2.0 | 1.3 | △ | -540 | Comp. Ex. |
| 2-4 | B | 390 | 50 | 0 | 10 | 0.2 | 18.8 | 56.3 | 2.0 | 1.3 | △ | -560 | Comp. Ex. |
| 2-5 | B | 340 | 0 | 100 | 10 | 0.2 | 17.0 | 52.6 | 2.1 | 1.3 | △ | -550 | Comp. Ex. |
| 2-6 | B | 290 | 50 | 100 | 10 | 0.1 | 13.8 | 51.9 | 2.2 | 1.4 | △ | -580 | Comp. Ex. |
| 1-11 | a | 440 | 0 | 0 | 11 | 0.9 | 22.6 | 58.3 | 2.1 | 1.3 | ○ | -520 | Ex. |
| 2-7 | a | 390 | 50 | 0 | 12 | 0.8 | 19.4 | 51.0 | 2.0 | 1.2 | ○ | -540 | Ex. |
| 2-8 | a | 340 | 0 | 100 | 12 | 0.7 | 17.8 | 51.9 | 2.2 | 1.3 | ○ | -540 | Ex. |
| 2-9 | a | 290 | 50 | 100 | 12 | 0.5 | 14.7 | 49.7 | 2.3 | 1.3 | ○ | -560 | Ex. |
| 1-12 | b | 440 | 0 | 0 | 10 | 1.5 | 23.5 | 59.0 | 2.1 | 1.3 | ○ | -490 | Ex. |
| 2-10 | b | 390 | 50 | 0 | 10 | 1.4 | 22.3 | 56.0 | 2.3 | 1.3 | ○ | -520 | Ex. |
| 2-11 | b | 340 | 0 | 100 | 10 | 1.3 | 19.4 | 52.3 | 2.4 | 1.3 | ○ | -540 | Ex. |

| Test No. | Rapid-hardening additive | Unit amount (kg/m³) | | | Slump (cm) | Setting promotion effect (hr) | Compressive strength (N/mm²) | | Compressive strength ratio to one having no rapid-hardening additive incorporated | | Laitance | Length change ($\times 10^{-6}$) | Note |
| | | Cement | Fly ash | Slag | | | At removal of formwork | At age of 7 days | At removal of formwork | At age of 7 days | | | |
|---|---|---|---|---|---|---|---|---|---|---|---|---|---|
| 2-12 | b | 290 | 50 | 100 | 10 | 1.0 | 16.6 | 51.8 | 2.6 | 1.4 | ○ | -550 | Ex. |
| 1-21 | k | 440 | 0 | 0 | 11 | 2.0 | 28.9 | 60.0 | 2.6 | 1.3 | ○ | -450 | Ex. |
| 2-13 | k | 390 | 50 | 0 | 11 | 2.0 | 23.0 | 56.8 | 2.4 | 1.3 | ○ | -490 | Ex. |
| 2-14 | k | 340 | 0 | 100 | 11 | 2.1 | 20.7 | 54.0 | 2.6 | 1.4 | ○ | -530 | Ex. |
| 2-15 | k | 290 | 50 | 100 | 11 | 2.2 | 17.0 | 52.3 | 2.7 | 1.4 | ○ | -560 | Ex. |
| 1-36 | Nil | 440 | 0 | 0 | 12 | - | 11.0 | 45.8 | 1.0 | 1.0 | × | -590 | Comp. Ex. |
| 2-16 | Nil | 390 | 50 | 0 | 12 | - | 9.5 | 43.3 | 1.0 | 1.0 | × | -620 | Comp. Ex. |
| 2-17 | Nil | 340 | 0 | 100 | 12 | - | 8.0 | 40.0 | 1.0 | 1.0 | × | -650 | Comp. Ex. |
| 2-18 | Nil | 290 | 50 | 100 | 12 | - | 6.4 | 37.4 | 1.0 | 1.0 | × | -670 | Comp. Ex. |
| 2-19 | Commercial product A | 290 | 50 | 100 | 10 | 0 | 10.6 | 44.9 | 1.7 | 1.2 | × | -610 | Comp. Ex. |
| 2-20 | Commercial product A + glycerin | 290 | 50 | 100 | 10 | 0.1 | 11.9 | 46.0 | 1.9 | 1.2 | × | -600 | Comp. Ex. |

EP 2 767 521 B1

13

TEST EXAMPLE 3

Tests were carried out in the same manner as in Test Example 2, except that using rapid-hardening additive A or rapid-hardening additive a, 100 kg/m$^3$ of slag and 50 kg/m$^3$ of fly ash were incorporated to cement by substitution, and the steam curing conditions and the maturity were changed as shown in Table 3. The results are shown in Table 3.

TABLE 3

| Test No. | Rapid-hardening additive | Curing conditions | | | | | MT (°C·hr) |
| --- | --- | --- | --- | --- | --- | --- | --- |
| | | Preliminary curing | Temperature raising | Holding at maximum temperature | Cooling | Total | |
| 3-1 | A | 40 min | 30 min | 50°C 1 hr 25 min | 30 min | 4 hr 40 min | 150 |
| 3-2 | A | 40 min | 30 min | 50°C 2 hr 25 min | 30 min | 4 hr 40 min | 210 |
| 2-3 | A | 40 min | 30 min | 50°C 3 hr | 30 min | 4 hr 40 min | 245 |
| 3-3 | A | 40 min | 50 min | 70°C 1 hr 54 min | 30 min | 3 hr 54 min | 245 |
| 3-4 | A | 40 min | 1 hr 10 min | 90°C 1 hr 10 min | 30 min | 3 hr 30 min | 245 |
| 3-5 | A | 40 min | 2 hr | 50°C 2 hr | 2 hr | 6 hr 40 min | 320 |
| 3-6 | a | 40 min | 30 min | 50°C 1 hr 25 min | 30 min | 4 hr 40 min | 150 |
| 3-7 | a | 40 min | 30 min | 50°C 2 hr 25 min | 30 min | 4 hr 40 min | 210 |
| 2-9 | a | 40 min | 30 min | 50°C 3 hr | 30 min | 4 hr 40 min | 245 |
| 3-8 | a | 40 min | 50 min | 70°C 1 hr 54 min | 30 min | 3 hr 54 min | 245 |
| 3-9 | a | 40 min | 1 hr 10 min | 90°C 1 hr 10 min | 30 min | 3 hr 30 min | 245 |
| 3-10 | a | 40 min | 2 hr | 50°C 2 hr | 2 hr | 6 hr 40 min | 320 |
| 3-11 | Nil | 40 min | 30 min | 50°C 1 hr 25 min | 30 min | 4 hr 40 min | 150 |
| 3-12 | Nil | 40 min | 30 min | 50°C 2 hr 25 min | 30 min | 4 hr 40 min | 210 |
| 2-18 | Nil | 40 min | 30 min | 50°C 3 hr | 30 min | 4 hr 40 min | 245 |
| 3-13 | Nil | 40 min | 50 min | 70°C 1 hr 54 min | 30 min | 3 hr 54 min | 245 |
| 3-14 | Nil | 40 min | 1 hr 10 min | 90°C 1 hr 10 min | 30 min | 3 hr 30 min | 245 |
| 3-15 | Nil | 40 min | 2 hr | 50°C 2 hr | 2 hr | 6 hr 40 min | 320 |

| Test No. | Slump (cm) | Setting promotion effect (hr) | Compressive strength (N/mm$^2$) | | Compressive strength ratio to one having no rapid-hardening additive incorporated | | Laitance | Length change ($\times 10^{-6}$) | Note |
|---|---|---|---|---|---|---|---|---|---|
| | | | At removal of formwork | At age of 7 days | At removal of formwork | At age of 7 days | | | |
| 3-1 | 12 | 0.2 | 7.0 | 45.5 | 1.8 | 1.3 | $\triangle$ | -610 | Comp. Ex. |
| 3-2 | 12 | | 9.0 | 47.3 | 1.8 | 1.3 | $\triangle$ | -600 | Comp. Ex. |
| 2-3 | 12 | | 12.2 | 49.8 | 1.9 | 1.3 | $\triangle$ | -590 | Comp. Ex. |
| 3-3 | 12 | | 14.4 | 50.6 | 1.9 | 1.4 | $\triangle$ | -590 | Comp. Ex. |
| 3-4 | 12 | | Heat crack | | | | $\triangle$ | - | Comp. Ex. |
| 3-5 | 12 | | 16.3 | 50.0 | 1.9 | 1.3 | $\triangle$ | -580 | Comp. Ex. |
| 3-6 | 12 | 0.5 | 8.6 | 45.0 | 2.2 | 1.3 | $\bigcirc$ | -600 | Comp. Ex. |
| 3-7 | 12 | | 10.6 | 47.3 | 2.1 | 1.3 | $\bigcirc$ | -580 | Ex. |
| 2-9 | 12 | | 14.7 | 49.7 | 2.3 | 1.3 | $\bigcirc$ | -560 | Ex. |
| 3-8 | 12 | | 17.6 | 50.0 | 2.4 | 1.3 | $\bigcirc$ | -560 | Ex. |
| 3-9 | 12 | | Heat crack | | | | $\bigcirc$ | - | Comp.Ex. |
| 3-10 | 12 | | 19.5 | 49.8 | 2.3 | 1.3 | $\bigcirc$ | -580 | Ex. |
| 3-11 | 12 | - | 3.9 | 35.6 | 1.0 | 1.0 | $\times$ | -680 | Comp. Ex. |
| 3-12 | 12 | | 5.0 | 36.2 | 1.0 | 1.0 | $\times$ | -680 | Comp. Ex. |
| 2-18 | 12 | | 6.4 | 37.4 | 1.0 | 1.0 | $\times$ | -670 | Comp. Ex. |
| 3-13 | 12 | | 7.4 | 37.3 | 1.0 | 1.0 | $\times$ | -660 | Comp. Ex. |
| 3-14 | 12 | | Heat crack | | | | $\times$ | - | Comp. Ex. |
| 3-15 | 12 | | 8.5 | 37.9 | 1.0 | 1.0 | $\times$ | -650 | Comp. Ex. |

TEST EXAMPLE 4

Tests were carried out in the same manner as in Test Example 3, except that the steam curing conditions were set to be a precuring time of 40 minutes at 20°C, a temperature raising for 30 minutes, holding at the maximum temperature of 50°C for 3 hours and cooling for 30 minutes, and the amount of the rapid-hardening additive used in 100 parts of the cement composition comprising cement and the rapid-hardening additive, was changed as shown in Table 4. The results are shown in Table 4.

TABLE 4

| Test No. | Rapid-hardening additive | | Slump (cm) | Setting promotion effect (hr) | Compressive strength (N/mm$^2$) | | Compressive strength ratio to one having no rapid-hardening additive incorporated | | Laitance | Length change (×10$^{-6}$) | Note |
|---|---|---|---|---|---|---|---|---|---|---|---|
| | Type | Amount (parts) | | | At removal of formwork | At age of 7 days | At removal of formwork | At age of 7 days | | | |
| 2-18 | A | 0 | 12 | - | 6.4 | 37.4 | 1.0 | 1.0 | × | -670 | Comp. Ex. |
| 4-1 | A | 2 | 12 | 0.2 | 9.3 | 41.2 | 1.5 | 1.1 | Δ | -650 | Comp. Ex. |
| 4-2 | A | 5 | 12 | 0.2 | 10.1 | 47.6 | 1.6 | 1.3 | Δ | -630 | Comp. Ex. |
| 2-3 | A | 7 | 12 | 0.2 | 12.2 | 49.8 | 1.9 | 1.3 | Δ | -590 | Comp. Ex. |
| 4-3 | A | 10 | 11 | 0.4 | 12.6 | 51.3 | 2.0 | 1.4 | Δ | -570 | Comp. Ex. |
| 4-4 | A | 12 | 10 | 0.6 | 13.3 | 47.3 | 2.1 | 1.3 | ○ | -590 | Comp. Ex. |
| 4-5 | A | 15 | 9 | 0.8 | 12.9 | 45.0 | 2.0 | 1.2 | ○ | -620 | Comp. Ex. |
| 4-6 | a | 2 | 12 | 0.1 | 9.5 | 40.6 | 1.5 | 1.1 | Δ | -650 | Ex. |
| 4-7 | a | 5 | 12 | 0.3 | 12.1 | 47.0 | 1.9 | 1.3 | ○ | -610 | Ex. |
| 2-9 | a | 7 | 12 | 0.5 | 14.7 | 49.7 | 2.3 | 1.3 | ○ | -560 | Ex. |
| 4-8 | a | 10 | 11 | 0.9 | 15.5 | 51.5 | 2.4 | 1.4 | ○ | -560 | Ex. |
| 4-9 | a | 12 | 10 | 1.3 | 16.0 | 47.5 | 2.5 | 1.3 | ○ | -570 | Ex. |
| 4-10 | a | 15 | 9 | 1.6 | 15.8 | 44.9 | 2.5 | 1.2 | ○ | -600 | Ex. |
| 4-11 | k | 2 | 12 | 0.5 | 10.5 | 42.3 | 1.6 | 1.1 | ○ | -640 | Ex. |
| 4-12 | k | 5 | 12 | 1.1 | 15.3 | 48.0 | 2.4 | 1.3 | ○ | -600 | Ex. |
| 2-15 | k | 7 | 11 | 2.2 | 17.0 | 52.3 | 2.7 | 1.4 | ○ | -560 | Ex. |
| 4-13 | k | 10 | 11 | 2.7 | 17.6 | 52.9 | 2.8 | 1.4 | ○ | -560 | Ex. |

(continued)

| Test No. | Rapid-hardening additive | | Slump (cm) | Setting promotion effect (hr) | Compressive strength (N/mm²) | | Compressive strength ratio to one having no rapid-hardening additive incorporated | | Laitance | Length change (×10⁻⁶) | Note |
|---|---|---|---|---|---|---|---|---|---|---|---|
| | Type | Amount (parts) | | | At removal of formwork | At age of 7 days | At removal of formwork | At age of 7 days | | | |
| 4-14 | k | 12 | 10 | 3.0 | 18.5 | 53.3 | 2.9 | 1.4 | ○ | -540 | Ex. |
| 4-15 | k | 15 | 9 | 3.5 | 18.8 | 54.6 | 2.9 | 1.5 | ○ | -530 | Ex. |
| 4-16 | Commercial product A | 2 | 12 | 0.0 | 8.6 | 39.1 | 1.3 | 1.0 | △ | -660 | Comp. Ex. |
| 4-17 | Commercial product A | 5 | 11 | 0.0 | 9.7 | 42.3 | 1.5 | 1.1 | △ | -640 | Comp. Ex. |
| 2-19 | Commercial product A | 7 | 10 | 0.0 | 10.6 | 44.9 | 1.7 | 1.2 | △ | -610 | Comp. Ex. |
| 4-18 | Commercial product A | 10 | 10 | 0.1 | 12.3 | 48.7 | 1.9 | 1.3 | △ | -600 | Comp. Ex. |
| 4-19 | Commercial product A | 12 | 10 | 0.2 | 13.1 | 48.5 | 2.0 | 1.3 | △ | -620 | Comp. Ex. |
| 4-20 | Commercial product A | 15 | 9 | 0.4 | 13.5 | 48.3 | 2.1 | 1.3 | △ | -620 | Comp. Ex. |

INDUSTRIAL APPLICABILITY

The rapid-hardening additive of the present invention is useful for the production of a concrete product, and a production method employing the rapid-hardening additive of the present invention can be utilized as a method for improving the productivity of a concrete product presenting less environmental burdens.

**Claims**

1.    A rapid-hardening additive comprising a heat-treated product which is obtained by heat-treating a mixture of a CaO raw material, a $CaSO_4$ raw material and at least one raw material selected from the group consisting of an $Al_2O_3$ raw material, a $Fe_2O_3$ raw material and a $SiO_2$ raw material, said heat-treated product containing from 10 to 70 parts by mass of free lime, from 10 to 50 parts by mass of a hydraulic compound and from 10 to 60 parts by mass of an anhydrous gypsum, per 100 parts by mass in total of the free lime, the hydraulic compound and the anhydrous gypsum,
     wherein the hydraulic compound is one or more of yeelimite represented by $3CaO \cdot 3Al_2O_3 \cdot CaSO_4$, a calcium silicate represented by $3CaO \cdot SiO_2$ or $2CaO \cdot SiO_2$, a calcium alumino ferrite represented by $4CaO \cdot Al_2O_3 \cdot Fe_2O_3$, $6CaO \cdot 2Al_2O_3 \cdot Fe_2O_3$ or $6CaO \cdot Al_2O_3 \cdot Fe_2O_3$, or a calcium ferrite such as $2CaO \cdot Fe_2O_3$,
     **characterized in that** the rapid-hardening additive contains from 0.1 to 10 parts by mass of glycerin in 100 parts by mass of the rapid-hardening additive.

2.    The rapid-hardening additive according to Claim 1, which has a Blaine's specific surface area of from 2,500 to 9,000 $cm^2$/g.

3.    The rapid-hardening additive according to Claim 1 or 2, which is obtained by incorporating in the rapid-hardening additive of claim 1 or 2 at most 40 parts by mass of fine Portland cement in 100 parts by mass of the rapid-hardening additive, wherein the fine Portland cement has an average particle size of at most 6 $\mu$m and at least 0.1 $\mu$m.

4.    The rapid-hardening additive according to any one of Claims 1 to 3, which is obtained by incorporating in the rapid-hardening additive of any one of claims 1 to 3 10 to 60 parts by mass of fine free lime and/or fine gypsum per 100 parts by mass in total of the heat-treated product and said fine free lime and/or said fine gypsum, wherein the fine free lime has an average particle size of at most 20 $\mu$m and/or the fine gypsum has an average particle size of at most 20 $\mu$m, which fine gypsum is obtained by pulverizing natural anhydrous gypsum.

5.    The rapid-hardening additive according to any one of Claims 1 to 4, wherein the hydraulic compound is $3CaO \cdot 3Al_2O_3 \cdot CaSO_4$, or a mixture of $3CaO \cdot 3Al_2O_3 \cdot CaSO_4$, $4CaO \cdot Al_2O_3 \cdot Fe_2O_3$ and $2CaO \cdot SiO_2$.

6.    A method for producing a concrete product, which comprises incorporating from 2 to 15 parts by mass of the rapid-hardening additive as defined in any one of Claims 1 to 5 in 100 parts by mass of a cement composition comprising cement and the rapid-hardening additive, and adjusting the steam curing temperature from casting to removal of formwork to be at most 70°C and the maturity from casting to removal of formwork to be from 210 to 320°C·hr.

7.    The method for producing a concrete product according to Claim 6, wherein as the cement, a mixed cement containing slag and/or fly ash is used.

8.    A concrete product produced by the production method as defined in Claim 6 or 7.

**Patentansprüche**

1.    Schnell härtendes Additiv, umfassend ein wärmebehandeltes Produkt, das durch Wärmebehandeln einer Mischung eines CaO-Rohmaterials, eines $CaSO_4$-Rohmaterials und wenigstens eines Rohmaterials, ausgewählt aus der Gruppe, bestehend aus einem $Al_2O_3$-Rohmaterial, einem $Fe_2O_3$-Rohmaterial und einem $SiO_2$-Rohmaterial, erhalten wird, wobei das wärmebehandelte Produkt von 10 bis 70 Massenanteile freien Kalk, von 10 bis 50 Massenanteile einer hydraulischen Verbindung und von 10 bis 60 Massenanteile wasserfreien Gips, pro insgesamt 100 Massenanteile des freien Kalks, der hydraulischen Verbindung und des wasserfreien Gipses, enthält, wobei die hydraulische Verbindung eines oder mehrere von Yeelimit, wiedergegeben durch $3CaO \bullet 3Al_2O_3 \cdot CaSO_4$, eines Calciumsilikats, wiedergegeben durch $3CaO \bullet SiO_2$ oder $2CaO \bullet SiO_2$, eines Calciumaluminatferrits, wiedergegeben durch

**EP 2 767 521 B1**

$4CaO \cdot Al_2O_3 \cdot Fe_2O_3$ oder $6CaO \cdot 2Al_2O_3 \cdot Fe_2O_3$ oder $6CaO \cdot Al_2O_3 \cdot Fe_2O_3$ oder eines Calciumferrits, wie $2CaO \cdot Fe_2O_3$, ist/sind, **dadurch gekennzeichnet, dass** das schnell härtende Additiv von 0,1 bis 10 Massenanteile Glycerin in 100 Massenanteilen des schnell härtenden Additivs enthält.

2. Schnell härtendes Additiv nach Anspruch 1, welches eine spezifische Oberfläche nach Blaine von 2.500 bis 9.000 $cm^2/g$ aufweist.

3. Schnell härtendes Additiv nach Anspruch 1 oder 2, welches durch Aufnehmen in das schnell härtende Additiv nach Anspruch 1 oder 2, von höchstens 40 Massenanteilen feinem Portlandzement in 100 Massenanteilen des schnell härtenden Additivs erhalten wird, wobei der feine Portlandzement eine durchschnittliche Partikelgröße von höchstens 6 $\mu$m und wenigstens 0,1 $\mu$m aufweist.

4. Schnell härtendes Additiv nach einem der Ansprüche 1 bis 3, welches durch Aufnehmen in das schnell härtende Additiv nach einem der Ansprüche 1 bis 3, von 10 bis 60 Massenanteilen feinem freiem Kalk und/oder feinem Gips pro insgesamt 100 Massenanteilen des wärmebehandelten Produkts und des feinen freien Kalks und/oder des feinen Gipses erhalten wird, wobei der feine freie Kalk eine durchschnittliche Partikelgröße von höchstens 20 $\mu$m aufweist und/oder der feine Gips eine durchschnittliche Partikelgröße von höchstens 20 $\mu$m aufweist, wobei der feine Gips durch Pulverisieren von natürlichem wasserfreiem Gips erhalten wird.

5. Schnell härtendes Additiv nach einem der Ansprüche 1 bis 4, wobei der hydraulische Bestandteil $3CaO \cdot 3Al_2O_3 \cdot CaSO_4$ oder eine Mischung von $3CaO \cdot 3Al_2O_3 \cdot CaSO_4$, $4CaO \cdot Al_2O_3 \cdot Fe_2O_3$ und $2CaO \cdot SiO_2$ ist.

6. Verfahren zur Herstellung eines Betonprodukts, welches das Aufnehmen von 2 bis 15 Massenanteile des wie in einem der Ansprüche 1 bis 5 definierten schnell härtenden Additivs in 100 Massenanteile einer Zementzusammensetzung umfasst, die den Zement und das schnell härtende Additiv umfasst, und Anpassen der Temperatur der Dampfhärtung vom Guss bis zur Entnahme der Schalung auf höchstens 70°C und der Reife vom Guss bis zur Entnahme der Schalung auf 210 bis 320°C•Std.

7. Verfahren zur Herstellung eines Betonprodukts nach Anspruch 6, wobei als Zement ein gemischter Zement verwendet wird, der Schlacke und/oder Flugasche enthält.

8. Betonprodukt, das durch das wie in Anspruch 6 oder 7 definierte Herstellungsverfahren hergestellt wird.

**Revendications**

1. Additif pour prise rapide comprenant un produit traité à la chaleur qui est obtenu par traitement à la chaleur d'un mélange d'une matière première de CaO, d'une matière première de $CaSO_4$ et d'au moins une matière première choisie dans l'ensemble constitué par une matière première d'$Al_2O_3$, une matière première de $Fe_2O_3$ et une matière première de $SiO_2$, ledit produit traité à la chaleur contenant de 10 à 70 parties en masse de chaux libre, de 10 à 50 parties en masse d'un composé hydraulique et de 10 à 60 parties en masse de gypse anhydre, pour 100 parties en masse au total de la chaux libre, du composé hydraulique et du gypse anhydre,
dans lequel le composé hydraulique est un ou plusieurs parmi la yeelimite représentée par $3CaO \cdot 3Al_2O_3 \cdot CaSO_4$, un silicate de calcium représenté par $3CaO \cdot SiO_2$ ou $2CaO \cdot SiO_2$, une alumino-ferrite de calcium représentée par $4CaO \cdot Al_2O_3 \cdot Fe_2O_3$, $6CaO \cdot Al_2O_3 \cdot Fe_2O_3$ ou $6CaO \cdot Al_2O \cdot Fe_2O_3$, et une ferrite de calcium telle que $2CaO \cdot Fe_2O_3$, **caractérisé en ce que** l'additif pour prise rapide contient de 0,1 à 10 parties en masse de glycérine dans 100 parties en masse de l'additif pour prise rapide.

2. Additif pour prise rapide selon la revendication 1, qui présente une surface spécifique de Blaine de 2500 à 9000 $cm^2/g$.

3. Additif pour prise rapide selon la revendication 1 ou 2, qui est obtenu par incorporation, dans l'additif pour prise rapide de la revendication 1 ou 2, d'au plus 40 parties en masse de ciment Portland fin dans 100 parties en masse de l'additif pour prise rapide, dans lequel le ciment Portland fin présente une granulométrie moyenne d'au plus 6 $\mu$m et d'au moins 0,1 $\mu$m.

4. Additif pour prise rapide selon l'une quelconque des revendications 1 à 3, qui est obtenu par incorporation, dans l'additif pour prise rapide de l'une quelconque des revendications 1 à 3, de 10 à 60 parties en masse de chaux libre fine et/ou de gypse fin pour 100 parties en masse au total du produit traité à la chaleur et de ladite chaux libre fine

21

et/ou dudit gypse fin, dans lequel la chaux libre fine présente une granulométrie moyenne d'au plus 20 μm et/ou le gypse fin présente une granulométrie moyenne d'au plus 20 μm, lequel gypse fin et obtenu par pulvérisation de gypse anhydre naturel.

5. Additif pour prise rapide selon l'une quelconque des revendications 1 à 4, dans lequel le composé hydraulique est $3CaO\cdot3Al_2O_3\cdot CaSO_4$ ou un mélange de $3CaO\cdot3Al_2O_3\cdot CaSO_4$, de $4CaO\cdot Al_2O_3\cdot Fe_2O_3$ et de $2CaO\cdot SiO_2$.

6. Procédé pour produire un produit en béton, qui comprend l'incorporation de 2 à 15 parties en masse de l'additif pour prise rapide tel que défini dans l'une quelconque des revendications 1 à 5 dans 100 parties en masse d'une composition de ciment comprenant du ciment et l'additif pour prise rapide, et l'ajustement de à température d'étuvage entre la coulée et le décoffrage pour qu'elle soit d'au plus 70°C, et de la maturité entre la coulée et le décoffrage de sorte qu'elle soit de 210 à 320°C•h.

7. Procédé pour produire un produit en béton selon la revendication 6, dans lequel, en tant que ciment, est utilisé un ciment bâtard contenant du mâchefer et/ou des cendres volantes.

8. Produit en béton produit par le procédé de production tel que défini dans la revendication 6 ou 7.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000301531 A
- JP 2001294460 A
- JP 2011153068 A
- JP 2000233959 A
- JP 2008519752 A

- JP 2002293591 A
- JP 9052748 A
- JP 2001316147 A
- WO 2010143506 A